# EUROPÄISCHE PATENTSCHRIFT

(11) **EP 3 673 317 B1**
(45) Veröffentlichungstag und Bekanntmachung des Hinweises auf die Patenterteilung: **23.04.2025**
(21) Anmeldenummer: 18765810.9
(22) Anmeldetag: 17.08.2018
(51) Int. Cl.: G02B 27/01, G02B 5/00, G02B 5/02, G02B 3/00

(54) **HEAD-UP-DISPLAY**
HEAD-UP DISPLAY
AFFICHAGE TÊTE HAUTE

(30) Priorität: 22.08.2017 DE 102017214592
(43) Veröffentlichungstag der Anmeldung: 01.07.2020
(73) Patentinhaber: Continental Automotive Technologies GmbH, 30175 Hannover (DE)
(72) Erfinder: VON SPIEGEL, Wolff, 61352 Bad Homburg (DE)
(74) Vertreter: Continental Corporation
(86) Internationale Anmeldenummer: PCT/EP2018/072331
(87) Internationale Veröffentlichungsnummer: WO 2019/038201

(56) Entgegenhaltungen:
- EP-A1- 1 729 172
- EP-A1- 1 729 172
- WO-A1-2014/119407
- WO-A1-2014/119407
- DE-A1- 19 755 565
- DE-A1- 19 755 565
- JP-A- 2012 208 440
- JP-A- 2012 208 440
- JP-A- 2016 122 059
- JP-A- 2016 122 059
- US-A1- 2015 253 469
- US-A1- 2015 253 469

## Beschreibung

Die vorliegende Erfindung betrifft ein Head-Up-Display welches ein Projektionssystem aufweist.

Die US 2016/0335959 A1 zeigt ein Head-Up-Display mit einem Anzeigeelement, einem Projektionssystem, einer Streuscheibe und einem Spiegelelement. Als nachteilig an diesem bekannten Head-Up-Display ist anzusehen, daß auf die Streuscheibe von außen in Richtung Projektionssystem fallendes Störlicht von der Oberfläche der Streuscheibe in Richtungen reflektiert wird, in denen sie über das optische System das Auge des Betrachters erreichen kann, und somit Irritationen beim Betrachter hervorruft.

Aus US 2015/253469 A1 ist ein Head-Up-Display gemäß Oberbegriff des Anspruch 1 bekannt.

Ein Head-Up-Display, welches weniger Irritationen durch einfallendes Störlicht erzeugt, ist wünschenswert.

Dies wird durch die in den unabhängigen Ansprüchen angegebenen Maßnahmen erreicht. Erfindungsgemäß ist vorgesehen, daß die fokussierenden Elemente unregelmäßig auf der Oberfläche der Streuscheibe angeordnet sind. Dies hat unter anderem den Vorteil der Unterdrückung von Moiré-Mustern.

Erfindungsgemäß wird bei einem Head-Up-Display, welches eine Zwischenbilderzeugungseinheit bestehend aus einem Anzeigeelement und einem Projektionssystem aufweist, eine Streuscheibe und ein Spiegelelement, vorgeschlagen, daß die Streuscheibe auf ihrer dem Projektionssystem zugewandten Seite fokussierende Elemente aufweist, und auf ihrer dem Projektionssystem abgewandten Seite eine lichtblockierenden Maske. Dies hat den Vorteil, daß die Maske Störlicht blockiert, welches somit nicht weiter in Richtung Projektionssystem beziehungsweise der Zwischenbildebene gelangt und dort keine Störreflexe oder Ähnliches erzeugen kann. Die fokussierenden Elemente fokussieren das vom Projektionssystem kommende Licht auf Öffnungen der Maske, sodaß nahezu das gesamte vom Projektionssystem abgegebene Licht auch zum Spiegelelement und damit in Richtung Betrachter gelangt. Aufgrund der fokussierenden Elemente wird es in einen für den Betrachter sinnvollen Winkelbereich gerichtet. Ebenso werden durch totale innere Reflexion, auch als TIR bezeichnet, im Streuelement erzeugte Störreflexe durch die erfindungsgemäße Anordnung effektiv reduziert.

Das Anzeigeelement kann dabei ein selbstleuchtendes Anzeigeelement sein, beispielsweise eine auf organischen Leuchtdioden basierende OLED-Anzeige, ein durchleuchtetes Anzeigeelement, beispielsweise eine auf Flüssigkristallen beruhende LCD-Anzeige, oder ein reflektierende Anzeigeelement, beispielsweise eine auf digitalen Mikrospiegeln beruhende DMD-Anzeige. Mit dem Projektionssystem wird das Bild des Anzeigeelements projiziert und vergrößert. Auch eine verkleinernde Projektion kann unter bestimmten Umständen sinnvoll sein. In einer Zwischenbildebene des Projektionssystems ist die Streuscheibe angeordnet. Das Bild auf der Streuscheibe wird durch ein Virtualisierungssystem zu einem virtuellen Bild transformiert und mittels des Spiegelelements der Umgebung überlagert. Als Spiegelelement dient dabei in vielen Fällen die Windschutzscheibe des Fahrzeugs oder ein zwischen dieser und dem Betrachter angeordneter sogenannter Combiner. Statt der Streuscheibe kann auch ein anderes, nicht scheibenförmiges Streuelement sinnvoll Verwendung finden. Als Virtualisierungssystem wird beispielsweise eine Kombination aus einem Faltspiegel und einem Konkavspiegel eingesetzt.

Vorzugsweise besteht die lichtblockierende Maske aus einem lichtabsorbierenden Material. Dies hat den Vorteil, daß in Richtung Projektionssystem einfallendes Störlicht von der Maske absorbiert wird. Durch Öffnungen der Maske gelangendes Störlicht, welches von den fokussierenden Elementen reflektiert wird, gelangt größtenteils auf den rückwärtigen Teil der Maske, wo es absorbiert wird. Nur ein verschwindend geringer Anteil gelangt ein zweitesmal durch die Öffnungen der Maske zurück oder wird von den fokussierenden Elementen nicht auf die Maske reflektiert und gelangt somit als Störlicht ins Auge des Betrachters. Auf diese Weise wird Störlicht, beispielsweise in das Head-Up-Display einfallendes Sonnenlicht, effektiv reduziert.

Es ist vorgesehen, daß die fokussierenden Elemente durch ein Mikrolinsenfeld, auch als Mikrolinsenarray bezeichnet, gebildet sind. Dies hat den Vorteil, daß ein solches Mikrolinsenarray kostengünstig herstellbar ist.

Erfindungsgemäß ist vorgesehen, daß die Mikrolinsen des Mikrolinsenarrays verkippt angeordnet sind. Dabei sind die Mikrolinsen je nach Abstand von der optischen Achse so gekippt, daß ausgehende, durch die Öffnung der Maske fallende Lichtbündel eine möglichst gute Anpassung an das Virtualisierungssystem aufweisen. Dies hat den Vorteil, daß alle Bereiche der Streuscheibe vom Betrachter im virtuellen Bild gleichmäßig wahrgenommen werden. Eine derartige Verkippung wird auf einfache Weise erreicht, indem die einzelnen Mikrolinsen gegenüber den Öffnungen der Maske unterschiedliche weit verschoben angeordnet sind. Der dadurch mehr oder weniger weit außerhalb der jeweiligen optischen Achse der einzelnen Mikrolinsen erfolgende Lichteinfall hat einen einer Verkippung entsprechenden Effekt. Eine reine Verschiebung gegenüber einer Verkippung erleichtert die Herstellung des Mikrolinsenarrays.

Vorteilhafterweise weist die Streuscheibe auf der dem Projektionssystem bzw. der Zwischenbilderzeugungseinheit abgewandten Seite der lichtblockierenden Maske eine weitere Oberflächenstruktur auf. Dies hat den Vorteil, daß dadurch eine weitere Lichtformung ermöglicht wird, ohne ein zusätzliches Bauelement im Strahlengang anordnen zu müssen. Dies spart Bauraum. Dabei ist die Oberflächenstruktur beispielsweise durch eine Vielzahl nebeneinander angeordneter Linsenoberflächen gebildet, wobei die Anzahl auch recht klein sein kann, im Extremfall ist eine einzige Linsenoberfläche als Oberflächenstruktur vorgesehen. Alternativ dazu kann die Maske selbst eine Oberflächenstruktur aufweisen. Diese ist beispielsweise als Fresnellinse ausgestaltet, als Diffusor oder als eine einen anderen gewünschten Effekt ermöglichende Struktur. Ist eine solche Oberflächenstruktur auf der dem Projektionssystem bzw. der Zwischenbilderzeugungseinheit zugewandten Seite der Maske angeordnet, so hat dies den Vorteil, daß aufgrund der Funktion der Maske kaum Rückreflexe bei von oben einfallendem Störlicht auftreten.

Erfindungsgemäß ist vorgesehen, daß die weitere Oberflächenstruktur eine solche ist, die eine Feldlinsenfunktion realisiert. Dies hat den Vorteil, daß eine ohnehin im Head-Up-Display erforderliche Feldlinse in die Streuscheibe integriert wird. Die Oberflächenstruktur ist dazu beispielsweise als Fresnellinsenstruktur ausgelegt. Ist als Oberflächenstruktur eine Mikrolinsenanordnung vorgesehen, so realisiert diese die Feldlinsenfunktion in Kombination mit dem Mikrolinsenarray. Durch eine geschickte Wahl der Abstände der Linsen der beiden Mikrolinsenanordnungen wird ein geeigneter Feldlinseneffekt erzielt.

Vorteilhafterweise nehmen die Öffnungen der Maske weniger als 5% der Fläche der Maske ein. Dies hat den Vorteil, daß im Idealfall bereits beim ersten Auftreffen von Störlicht auf die Maske mehr als 95 % davon eliminiert werden. Die geringe Fläche der Öffnung hat zur Folge, daß das von den fokussierenden Elementen fokussierte Licht die Öffnungen der Maske mit einem Öffnungswinkel von etwa 30° verläßt, was für ein Head-Up-Display gut geeignet ist.

Eine Variante des erfindungsgemäßen Head-Up-Displays weist anstatt einem Anzeigeelement und einem Projektionssystem eine andere Zwischenbilderzeugungseinheit auf, vorzugsweise einen Phasenmodulator oder ein Laser-Scanning-System. Auch bei einer solchen Zwischenbilderzeugungseinheit lassen sich mit der erfindungsgemäßen Streuscheibe störende Reflexe sinnvoll reduzieren.

Eine noch bessere Unterdrückung von Moiré-Mustern wird erreicht wenn die fokussierenden Elemente selbst unregelmäßige Formen aufweisen.

Alternativ oder zusätzlich ist vorgesehen, daß die fokussierenden Elemente eine gemeinsame Strukturgröße aufweisen. Es treten also keine wesentlich größeren oder wesentlich kleineren Strukturen auf als im Mittel. Dies verhindert großflächige, wahrnehmbare Variationen in der Ausleuchtung.

Erfindungsgemäß haben die fokussierenden Elemente eine runde Form und/oder eine längliche Form und/oder eine unregelmäßige Form. Insbesondere eine Mischung dieser Formen hat eine besonders gute Unterdrückung von Moiré-Mustern zur Folge.

Eine erfindungsgemäße optische Einheit für ein Head-Up-Display weist ein Anzeigeelement, ein Projektionssystem und eine Streuscheibe wie oben beschrieben auf. Die optische Einheit ist dazu geeignet, mit einem Spiegelelement kombiniert ein erfindungsgemäßes Head-Up-Display zu bilden und weist die zu den oben genannten erfinderischen Head-Up-Displays genannten Vorteile auf. Oft ist die optische Einheit die wirtschaftliche Einheit, die erst beim Einbau in ein Fahrzeug mit dem in diesem befindlichen Spiegelelement, insbesondere der Windschutzscheibe, ein Head-Up-Display bildet.

Bei einem erfindungsgemäßen Verfahren zum Herstellen eines Head-Up-Displays werden zunächst fokussierende Elemente auf einer ersten Seite eines Trägers einer Streuscheibe erzeugt. Dies erfolgt beispielsweise mit einer entsprechend gestalteten Spritzgußform, mittels der das Streuelement erzeugt wird. Auf ihrer der ersten Seite gegenüberliegenden zweiten Seite wird eine Beschichtung aufgebracht. Diese kann lichtblockierend sein, und hierbei sowohl beidseitig absorbierend, als auch zur Streuscheibe hin absorbierend und auf ihrer von der Streuscheibe abgewandten Seite reflektierend. Statt einer lichtblockierenden Beschichtung kann hier auch eine andere Beschichtung vorgesehen sein, beispielsweise ein Photolack. Anschließend wird die erste Seite mit einem Strahlenbündel definierter Eigenschaften mit einer Intensität und Dauer etc. belichtet, die zum Erzeugen von Öffnungen in der Beschichtung geeignet ist. Hier kann gegebenenfalls eine Kombination mit Ätzmedium oder anderen geeigneten Maßnahmen erfolgen. Anschließend wird die Streuscheibe mit einem Projektionssystem kombiniert, welches ein Strahlenbündel der genannten definierten Eigenschaften zu erzeugen in der Lage ist, sowie mit einem Anzeigeelement. Dies hat den Vorteil, daß sichergestellt ist, daß die Streuscheibe mitsamt Maske optimal an das Projektionssystem angepaßt sind. Alternativ dazu werden die Streuscheibe und das Projektionssystem zunächst kombiniert und die Belichtung erfolgt dann durch das mit der Streuscheibe kombinierte Projektionssystem hindurch. Auch auf diese Weise ist sichergestellt, daß Streuscheibe und Projektionssystem optimal aneinander angepaßt sind. Auch ein aus Auflegen, Belichten, Ätzen und Aufkleben bestehender Ablauf ist hier einsetzbar. Ebenso können hier auf Puls-Scannen beruhende oder andere geeignete Verfahren sinnvoll zur Anwendung kommen.

Bei einem auch als "Lift-Off-Verfahren" bezeichneten Verfahren gemäß eines Aspekts der Erfindung wird auf der Rückseite des Linsenarrays ein Photolack aufgebracht. Dieser wird durch das Linsenarray hindurch belichtet und bleibt an den belichteten Stellen stehen, also dort, wo sich später die Öffnungen befinden sollen. Anschließend wird eine Beschichtung aufgebracht, die lichtundurchlässig ist. Dann wird der stehengebliebene Photolack aufgelöst, wodurch auch die sich über diesem befindliche Beschichtung entfernt wird. Damit sind die Öffnungen der Maske hergestellt.

Bei einem erfindungsgemäßen Herstellungsverfahren ist vorgesehen, daß vor dem Kombinieren auf die zweite Seite der Streuscheibe ein Klebemittel aufgetragen wird, auf die eine Mikrolinsenanordnung aufgebracht wird, welche anschließend bezüglich der Fokussierungselemente justiert wird und das Klebemittel anschließend ausgehärtet wird. Dies stellt eine effiziente Möglichkeit dar, die Streuscheibe mit einer Mikrolinsen Anordnung herzustellen. Auch rein adhäsive Haftung, Klammern oder ein nichtaushärtbares Klebemittel können hier sinnvoll eingesetzt werden.

Diese und weitere Varianten und Vorteile der Erfindung sind in der nachfolgenden Beschreibung von Ausführungsbeispielen angegeben und lassen sich daraus und aus den Figuren entnehmen. Dabei zeigen:
- Fig.1: Head-Up-Display in schematische Darstellung
- Fig.2: Streuscheibe
- Fig.3: Variante einer Streuscheibe
- Fig.4: Variante eines Head-Up-Displays
- Fig.5: beispielhaftes Mikrolinsenarray
- Fig.6 Fig.10: beispielhaftes Mikrolinsenarray
- Fig.7: Herstellungsverfahren
- Fig.8: Flußdiagramm eines Herstellungsverfahrens
- Fig.9: Ausschnittsvergrößerung aus Fig.2 Variante eines Head-Up-Displays

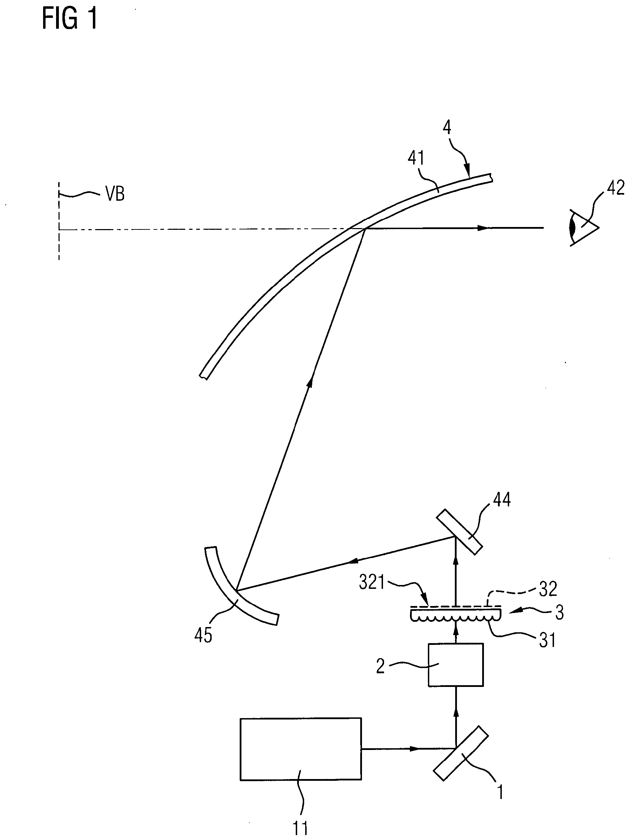

Fig.1 zeigt ein erfindungsgemäßes Head-Up-Display mit einem Anzeigeelement 1, einem Projektionssystem 2, einer Streuscheibe 3 und einem Spiegelelement 4. Das Spiegelelement 4 ist hier als Windschutzscheibe 41 eines Kraftfahrzeugs ausgebildet. Das Anzeigeelement 1 wird von einer Lichtquelle 11 beleuchtet. Das von der Lichtquelle 11 kommende Licht wird am Anzeigeelement 1 reflektiert in Richtung Projektionssystem 2. Dieses projiziert und vergrößert oder, falls entsprechend ausgelegt, verkleinert das Bild des Anzeigeelements auf die Streuscheibe 3. Von dort wird es von einem Faltspiegel 44 auf einen Konkavspiegel 45 reflektiert, der es wiederum vergrößert und in ein virtuelles Bild transformiert. Das vom Konkavspiegel 45 kommende Licht wird am Spiegelelement 4, der Windschutzscheibe 41, in das Auge 42 des Betrachters reflektiert. Dabei wird es dem durch die Windschutzscheibe 41 sichtbaren Bild der Umgebung überlagert und erscheint als virtuelles Bild VB in Fahrtrichtung vor der Windschutzscheibe über der Motorhaube des Fahrzeugs bzw. sogar vor dem Fahrzeug.

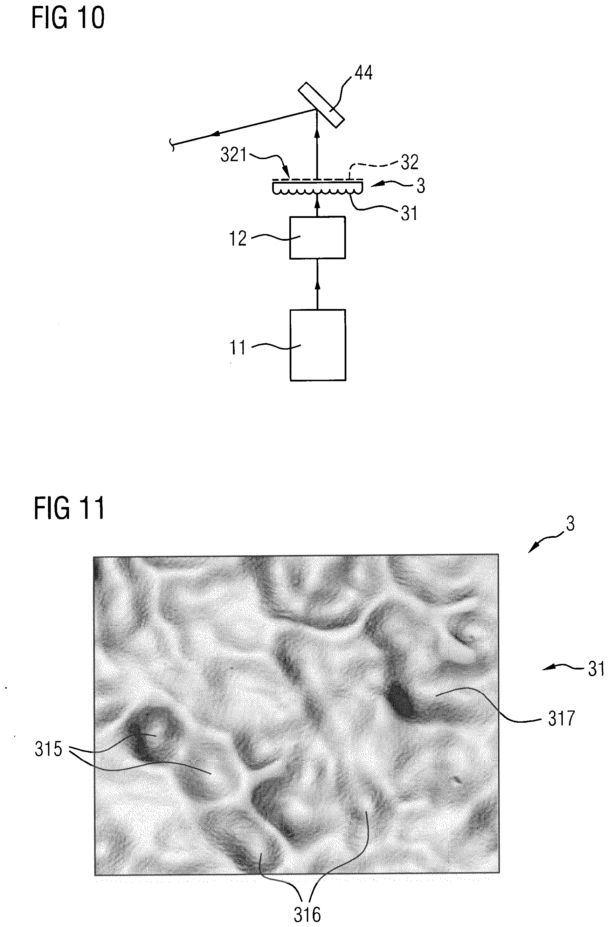

Man erkennt, daß die Streuscheibe 3 an ihrer in der Abbildung unteren Seite fokussierende Elemente 31 aufweist. Diese sind erfindungsgemäß unregelmäßig auf der Fläche der Streuscheibe 3 angeordnet, auch wenn dies aufgrund der Größenverhältnisse in dieser und einigen der folgenden Abbildungen nicht immer klar erkennbar sein sollte. Ein klar erkennbares Beispiel ist nachfolgend zu Fig.11 beschrieben. Die fokussierenden Elemente 31 sind dem Projektionssystem 2 zugewandt. Auf der dem Projektionssystem 2 abgewandten Seite der Streuscheibe 3 befindet sich eine lichtblockierende Maske 32. Die lichtblockierende Maske 32 weist Öffnungen 321 auf, durch die vom Projektionssystem 2 kommendes und von den fokussierenden Elementen 31 fokussiertes Licht hindurchfällt und Richtung Faltspiegel 44 gelangt.

In den folgenden Abbildungen werden für gleiche oder gleichwirkende Elemente entsprechende Bezugszeichen wie zuvor beschrieben verwendet. Einzelne Elemente werden nicht notwendigerweise erneut beschrieben, es sei denn, dies erscheint zum weiteren Verständnis sinnvoll.

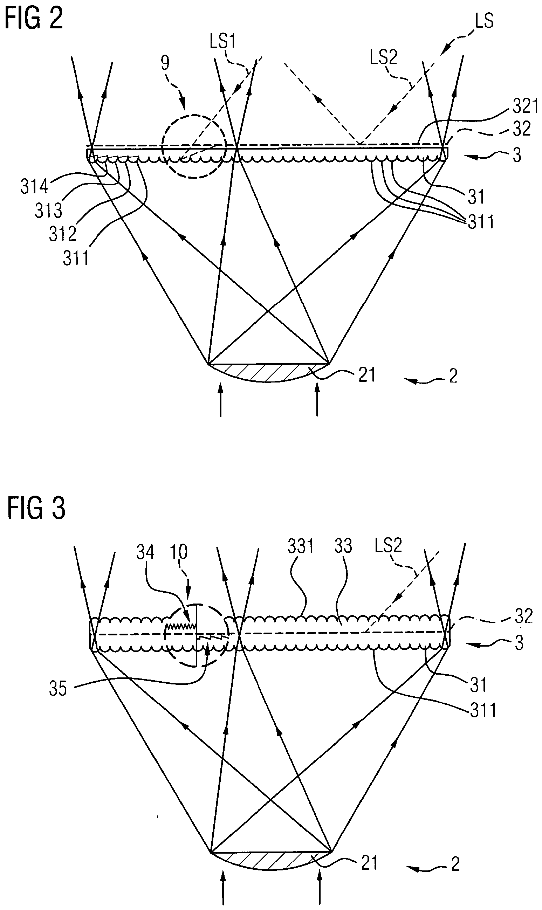

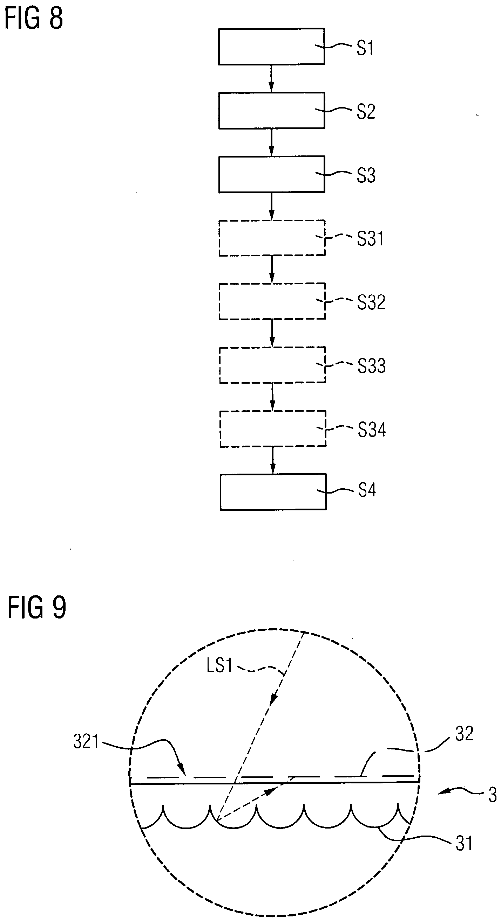

Fig.2 zeigt eine Streuscheibe 3 gemäß Erfindung in vergrößerter Darstellung. Man erkennt von einer Linse 21 des Projektionssystems 2 her kommendes Licht, welches von den fokussierenden Elementen 31 auf Öffnungen 321 der lichtblockierenden Maske 32 fokussiert wird. Die entsprechenden Lichtbündel sind mittels durchgezogener Linien dargestellt, die Ausbreitungsrichtung ist durch Pfeile angedeutet. Man erkennt weiterhin durch gestrichelte Linien angedeutetes Störlicht LS, welches von rechts oben kommend auf die Streuscheibe 3 fällt. Hierbei handelt es sich insbesondere um Sonnenlicht, welches bei ungünstigen Bedingungen in das Head-Up-Display hineinstrahlt und typischerweise über ein Virtualisierungssystem, welches hier durch den Faltspiegel 44 und den Konkavspiegel 45 gebildet wird, auf die Streuscheibe 3 gelangt. Im linken Teil der Abbildung erkennt man Störlicht LS1, welches durch eine der Öffnungen 321 der lichtblockierende Maske 32 fällt, an der Grenzfläche eines der fokussierenden Elemente 31 reflektiert wird und von unten auf die lichtblockierende Maske 32 trifft. Siehe dazu auch die Fig.9, in der der gestrichelte Bereich 9 vergrößert dargestellt ist. Die Maske 32 ist auf ihrer den fokussierenden Elementen 31 zugewandten Seite absorbierend, sodaß das von unten auf diese gelangendes Störlicht LS1 dort absorbiert wird. Auf der rechten Seite ist Störlicht LS2 gezeigt, welches an der Oberseite der lichtblockierenden Maske 32 reflektiert wird. Gemäß einer Variante der Erfindung ist die lichtblockierende Maske 32 auch auf ihrer Oberseite absorbierend ausgelegt, sodaß auch das Störlicht LS2 von der lichtblockierende Maske 32 absorbiert wird und keine Irritationen auslösen kann. Die fokussierenden Elemente 31 sind Mikrolinsen 311, die als Mikrolinsenarray angeordnet sind. Im in der Abbildung linken Teil sind die einzelnen Mikrolinsen 312,313,314 bezüglich den übrigen Mikrolinsen 311 gekippt angeordnet. Das heißt, ihre Symmetrieachse steht nicht senkrecht zur Ebene der Streuscheibe 3, sondern ist je nach Abstand vom Mittelpunkt unterschiedlich geneigt. Dies dient dazu, auch das zum Rand der Streuscheibe 3 hin auftreffende Licht möglichst optimal zu verteilen. Die gekippt angeordneten Mikrolinsen 312-314 sind hier nur beispielhaft dargestellt, der Kippwinkel ist auch nicht notwendigerweise maßstabsgerecht dargestellt, sondern soll hier das Prinzip verdeutlichen. Die Öffnungen 321 können beispielsweise auch als transparente Bereiche einer als photographischem Film realisierten Maske 32 ausgebildet sein.

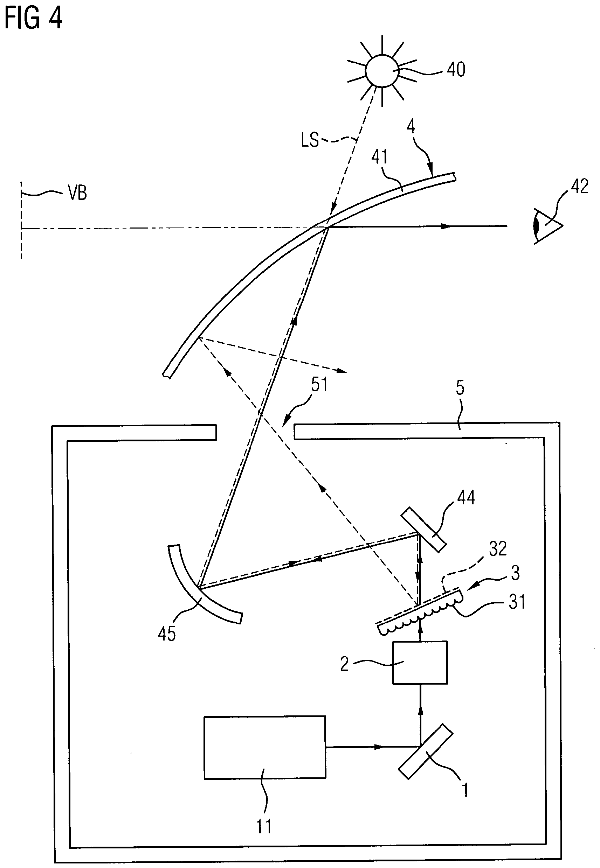

Das Nutzlicht tritt, vom Projektionssystem 2 her kommend, nach Passieren der fokussierenden Elemente 31 beziehungsweise gegebenenfalls vorhandener weiterer Bestandteile der Streuscheibe 3, durch die Öffnungen 321 der als Aperturmaske wirkenden lichtblockierende Maske 32. Soll die Abstrahlrichtung weiter kontrolliert werden, so werden die Mikrolinsen 311-314 in geeigneter Weise verkippt ausgeführt, und die Lage der Öffnungen angepaßt. Das Störlicht LS,LS1,LS2 wird, wenn es auf die lichtblockierende Maske 32 trifft, bei absorbierender Ausführung der sonnenzugewandten Seite, hier der oberen Seite, blockiert. Bei reflektiver Ausführung der sonnenzugewandten Seite der Maske 32 wird es, wie zum Störlicht LS2 gezeigt, reflektiert. Dies ist typischerweise mit einer Verkippung der Streuscheibe 3 kombiniert, siehe Fig.4. Auf diese Weise wird das Störlicht LS2 aus dem Strahlengang in eine Lichtfalle geleitet. Bei einer reflektiven sonnenzugewandten Seite, in der Abbildung der oberen Seite, ist in der Regel mit einer besseren Störlichtunterdrückung zu rechnen als bei einer absorbierend ausgelegten sonnenzugewandten Seite, da gute Absorber nicht die Regel sind. Allerdings ist dann eine Verkippung oder eine ähnlich wirkende Maßnahme erforderlich, die ein Zurückspiegeln in das Auge 42 des Fahrers vermeidet. Auf der projektorzugwandten, in der Abbildung unteren Seite ist -wie dargestellt- eine absorbierende Schicht vorgesehen. Ansonsten besteht die Gefahr, daß Licht unkontrolliert innerhalb der Streuscheibe 3 läuft und somit eine Kontrastminderung bewirken kann.

Fig.3 zeigt eine weitere Variante einer erfindungsgemäßen Streuscheibe 3. Bei dieser ist in der Abbildung oberhalb der lichtblockierenden Maske 32 eine weitere Oberflächenstruktur 33 angeordnet. Diese besteht ebenfalls aus vielen nebeneinander angeordneten Mikrolinsen 331, welche so ausgebildet sind, daß sie in Kombination mit den unteren fokussierenden Elementen 31 eine Feldlinsenfunktion realisieren. Dabei sind die Mikrolinsen 331 oberhalb und die Mikrolinsen 311 unterhalb der Maske 32 im zentralen Bereich der Streuscheibe 3 nicht gegeneinander verschoben, sodaß Licht im zentralen Bereich nahezu nicht abgelenkt wird. Je weiter entfernt vom Zentralbereich sich die Mikrolinsen 331, 311 befinden, desto stärker sind sie gegeneinander verschoben, sodaß Licht im Außenbereich stärker zur optischen Achse hin gekippt wird je weiter von der optischen Achse entfernt es die Streuscheibe 3 passiert. Somit wird durch die unterschiedlichen Gitterabstände der Mikrolinsen 331 und der Mikrolinsen 311 ein Feldlinseneffekt erzielt. Das von der Streuscheibe 3 Richtung Spiegelelement 4 verlaufende Licht hat einen Öffnungswinkel und eine Orientierung, die durch die Ausgestaltung der Oberflächenstruktur 33 vorgegeben ist. Man erkennt hier ein Störlichtbündel LS2, welches durch die Mikrolinsen 331 auf die lichtblockierende Maske 32 trifft und dort absorbiert wird. Die Maske 32, die in Fig.3 dargestellt ist, ist beidseitig absorbierend ausgelegt. Die zweite Oberflächenstruktur 33 dient zur weiteren Nutzlichtformung. Ein Vorteil liegt in der Möglichkeit der Integration einer Feldlinsenfunktion mit gleichmäßigen Linsenarrays. Eine Ausführung mit reflektiver sonnenzugewandter Seite ist eine Option, die unter geeigneten Randbedingungen sinnvoll einsetzbar ist. Im Bereich 10 ist auf der linken Seite als eine alternative Variante eine Oberflächenstruktur 34 der Streuscheibe 3, die oberhalb der Maske 32 angeordnet ist, beispielhaft und schematisch gezeigt. Diese ist statt der Oberflächenstruktur 33 vorgesehen, die als separate Schicht aufgebracht ist. Auf der rechten Seite des Bereichs 10 ist eine Oberflächenstruktur 35 der Streuscheibe 3 gezeigt, die unterhalb der Maske 32 angeordnet ist, beispielhaft und schematisch gezeigt. Diese Oberflächenstruktur 35 weist eine Mikrostruktur auf, die Fresneleffekte erzeugt. Man erkennt beispielhaft eine Schräge unter den Öffnungen der Maske 32. Ein Vorteil der Anordnung der Oberflächenstruktur 35 unterhalb der Maske 32 besteht darin, daß aufgrund der Funktion der Maske 32 kaum Rückreflexe bei von oben einfallendem Störlicht auftreten.

Fig.4 zeigt eine Variante eines erfindungsgemäßen Head-Up-Displays. Die optischen Elemente sind im wesentlichen so angeordnet wie zu Fig.1 beschrieben. Ein Unterschied ist, daß die Streuscheibe 3 bezüglich der optischen Achse des vom Virtualisierungssystem, hier dem Faltspiegel 44 und dem Konkavspiegel 45, kommenden Lichts gekippt angeordnet ist. Der Kippwinkel ist hier nicht notwendigerweise maßstabsgerecht dargestellt sondern ist übertrieben eingezeichnet, um das Prinzip zu verdeutlichen. Man erkennt, daß gestrichelt dargestelltes, von der Sonne 40 kommendes Störlicht LS nach Durchlaufen der Windschutzscheibe 41 im selben Winkel verläuft wie das mit durchgezogener Linie dargestellte, vom Konkavspiegel 45 kommende Licht, aber in entgegengesetzter Richtung. Das Störlicht LS gelangt dann in das Head-Up-Display. Es wird vom Konkavspiegel 45 und vom Faltspiegel 44 reflektiert und trifft auf die lichtblockierende Maske 32 der Streuscheibe 3. Die hier dargestellte lichtblockierende Maske 32 weist auf ihrer den fokussierenden Elementen 31 abgewandten Seite eine reflektierende Oberfläche auf, sodaß das Störlicht LS reflektiert wird. Aufgrund der Verkippung der Streuscheibe 3 wird das Störlicht LS in der Darstellung durch eine Öffnung 51 eines Gehäuses 5 des Head-Up-Displays nach außen geleitet, wo es jedenfalls nicht wieder ins Auge 42 des Betrachters gelangt und somit bei diesem keine Irritation auslöst.

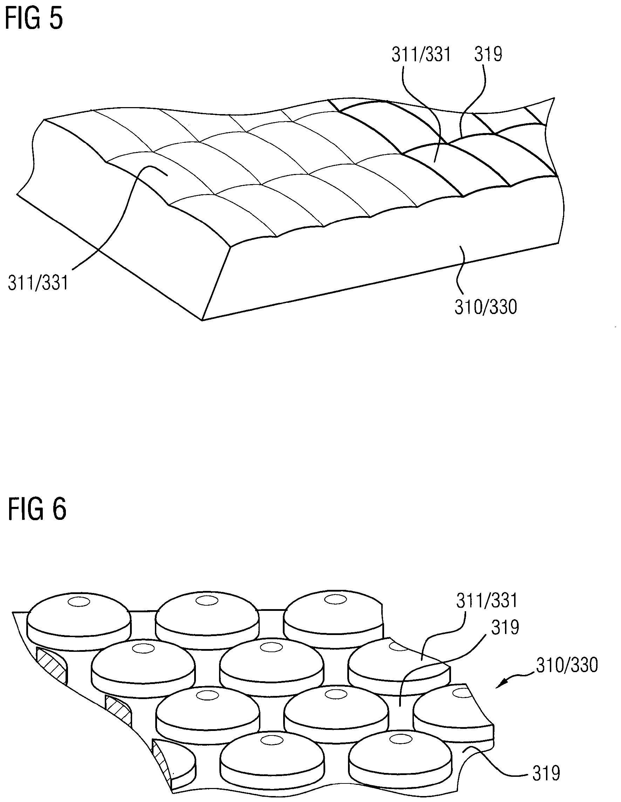

Fig.5 zeigt einen Ausschnitt eines regelmäßigen Mikrolinsenarrays 310 aus Mikrolinsen 311 beziehungsweise einer Mikrolinsenanordnung 330 aus Mikrolinsen 331, welche nicht in den Schutzbereich der Ansprüche fallen. Das Mikrolinsenarray 310 und die Mikrolinsenanordnung 330 können prinzipiell ähnlich aufgebaut sein, die Größen der Mikrolinsen 311, 331, ihre Wölbung und andere optischen Eigenschaften unterscheiden sich entsprechend ihrer Funktion. Die Mikrolinsen 311,331 decken hier jeweils eine rechteckige Fläche ab, und gehen nahtlos ineinander über. In einem alternativen Teil des dargestellten Mikrolinsenarrays 310 beziehungsweise der Mikrolinsenanordnung 330 befinden sich zwischen den Mikrolinsen 311,331 intransparente Bereiche 319. Diese dienen dazu, im Grenzbereich der einzelnen Mikrolinsen 311,331 untereinander eventuell durch Herstellungsungenauigkeiten der Oberfläche undefiniert gebrochenes Licht zu blockieren und damit mögliche Irritationen beim Betrachter zu vermeiden.

Fig.6 zeigt ein anderes Mikrolinsenarray 310 beziehungsweise eine andere Mikrolinsenanordnung 330 welche nicht in den Schutzbereich der Ansprüche fallen. Bei diesen sind die Mikrolinsen 311,331 regelmäßig entsprechend der hexagonal dichtesten Packung angeordnet. Zwischen den Mikrolinsen 311,331 befinden sich Bereiche 319. Diese sind vorteilhafterweise intransparent ausgeführt. Dort auftreffendes Licht würde nur durch eine unter unverhältnismäßig großem Aufwand herzustellende Oberflächengeometrie noch korrekt auf eine der den benachbarten Mikrolinsen 311 zugeordneten Öffnungen 51 gebrochen werden, beziehungsweise von den Öffnungen 51 kommendes Licht würde nur durch eine unter unverhältnismäßig großen Aufwand herzustellende Oberflächengeometrie noch korrekt durch eine der entsprechenden Mikrolinsen 331 gebrochen werden. Die Bereiche 319 sind daher intransparent ausgeführt, und schatten das auf sie treffende Licht ab.

Fig.9 zeigt eine Ausschnittsvergrößerung des Bereichs 9 der Fig.2. Man erkennt das von außen einfallende Störlicht LS1, welches durch eine Öffnung 321 der lichtblockierenden Maske 32 fällt, an einer Grenzschicht eines der fokussierenden Elemente 31 reflektiert wird, und anschließend von unten auf die lichtblockierende Maske 32 fällt. Ein störender Reflex wird somit vermieden. Dieser Vorteil wird auch dann erreicht, wenn die lichtblockierende Maske 32 an ihrer Oberseite reflektierend und an ihrer Unterseite absorbierend ausgebildet ist.

Fig.10 zeigt einen Teil eines Head-Up-Displays entsprechend dem rechten unteren Teil der Fig.1, bei dem anstatt des Anzeigeelements 1 und dem Projektionssystem 2 als Zwischenbilderzeugungseinheit ein Phasenmodulator 12 zwischen Lichtquelle 11 und Streuscheibe 3 angeordnet ist. Der auf den Faltspiegel 44 folgende Strahlengang entspricht dem zu Fig.1 gezeigten, und ist daher hier nicht erneut dargestellt. Der Phasenmodulator 12 ist hier in Transmission dargestellt, wird oft aber auch in Reflexion verwendet. Er weist im allgemeinen noch eine oder mehrere Linsen und gegebenenfalls weitere optische Elemente auf, die hier in der vereinfachten Darstellung nicht erkennbar sind.

Fig.11 zeigt ein Beispiel von erfindungsgemäß unregelmäßig auf der Oberfläche der Streuscheibe 3 angeordneten fokussierenden Elementen 31,315,316,317. Die Streuscheibe 3 ist in diesem Ausführungsbeispiel ein interferenzlithographisch hergestellter Diffusor. Die fokussierenden Elementen 31,315,316,317 haben auch unregelmäßige Formen. Ihnen gemeinsam ist die Strukturgröße. Es treten also keine wesentlich größeren oder wesentlich kleineren Strukturen auf. Es gibt fokussierende Elemente 315 mit nahezu runder Form. Diese haben ähnliche optische Eigenschaften wie die weiter oben beschriebenen Mikrolinsen, zum Beispiel fokussieren sie auf einen Punkt oder nahezu auf einen Punkt. Es gibt fokussierende Elemente 316 mit eher länglicher Form. Diese haben einen eher länglichen Fokus, eine Fokuslinie. Es gibt auch fokussierende Elemente 317 mit unregelmäßiger Form. Dies führt zu einer eher unregelmäßigen Fokusgeometrie. Die gemäß einem erfindungsgemäßen Verfahren mittels Belichtung hergestellte Maske weist demgemäß eine unregelmäßige Verteilung unregelmäßig geformter Öffnungen auf, die optimal an die unregelmäßig angeordnete und geformte fokussierende Elemente 31,315,316,317 aufweisende Streuscheibe 3 angepaßt sind. Diese Variante weist eine sehr gute Unterdrückung von Moiré-Mustern auf.

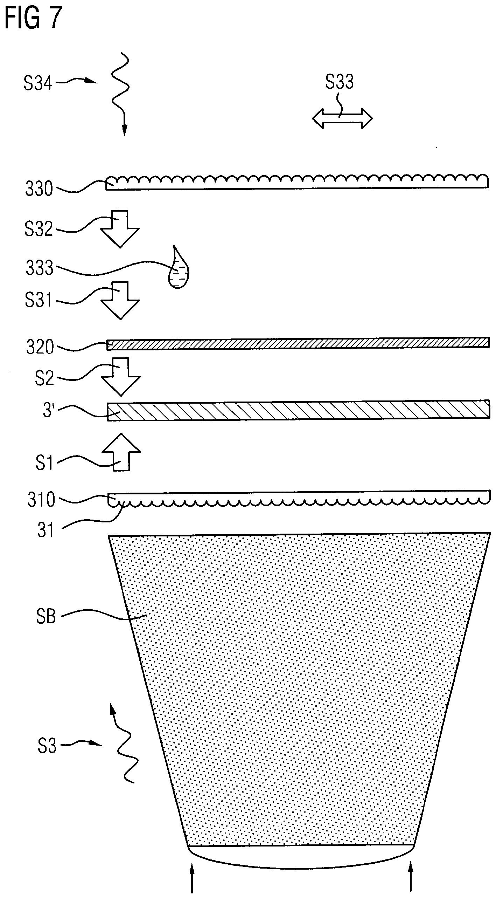

Fig.7 zeigt ein erfindungsgemäßes Herstellungsverfahren. Auf einen Träger 3', der gegebenenfalls schon die Streueigenschaft der Streuscheibe 3 aufweist, wird in einem Schritt S1 eine Anordnung 310 fokussierender Elemente 31 aufgebracht, wobei die fokussierenden Elemente 31,315,316,317 unregelmäßig auf der Oberfläche der Streuscheibe 3 angeordnet sind. Das Aufbringen ist mittels eines Pfeils angedeutet. In einem Schritt S2 wird eine lichtblockierende Beschichtung 320 auf die gegenüberliegende Seite des Trägers 3' aufgebracht. In einem Schritt S3 wird die mit den fokussierenden Elementen 31 versehene Seite des Trägers 3' mit einem Strahlenbündel SB definierter geometrischer Eigenschaften mit einer Wellenlänge, einer Intensität und einer Dauer, die zum Erzeugen von Öffnungen 321 in der Beschichtung geeignet sind, belichtet. Solche Öffnungen 321 sind in vorhergehenden Abbildungen gezeigt. In einem Schritt S4 wird der Träger 3' mit einem Proj ektionssystem 2 und einem Anzeigeelement 1 kombiniert. Dabei ist das Projektionssystem 2 in der Lage, ein Strahlenbündel SB der genannten definierten geometrischen Eigenschaften zu erzeugen, welches aber im allgemeinen in Wellenlänge, Intensität und/oder Dauer von demjenigen zur Herstellung der Öffnungen abweicht. Eine derartige Kombination ist beispielsweise in Fig.1 und Fig.4 gezeigt.

Zum Herstellen einer erweiterten Streuscheibe 3 ist vorgesehen, in einem Schritt S31 ein Klebemittel 333 auf die mit der lichtblockierenden Maske 32 versehene zweite Seite der Streuscheibe 3 aufzubringen. In einem anschließenden Schritt S32 wird eine Mikrolinsenanordnung 330 auf das Klebemittel 333 aufgebracht, und anschließend in einem Schritt S33 bezüglich der fokussierenden Elementen 31 justiert. Nach erfolgter Justage wird das Klebemittel 333 in einem Schritt S34 ausgehärtet. Hierzu wird beispielsweise ein mittels UV-Strahlung aushärtbares Klebemittel 333 verwendet. Die Belichtung mit UV-Licht erfolgt vorzugsweise von der den fokussierenden Elementen 31 abgewandten Seite her. Fig.8 zeigt ein entsprechendes Flußdiagramm, in dem die fakultativen Schritte S31 bis S34 gestrichelt dargestellt sind.

Bei dem Herstellungsverfahren bietet es sich an, die Belichtung durch das Linsenarray aus Richtung des Projektionssystems 2 durchzuführen. Die Öffnungen in der Maske 32 werden dann durch Laserablation oder andere Wechselwirkungen des Lichts mit der unstrukturierten Maske, der lichtblockierenden Beschichtung 320, optimal ausgerichtet aufgebracht. Dies erfolgt beispielsweise durch eine bessere Löslichkeit an den belichteten Stellen.

Bei projektorbasierten Windschutzscheiben-Head-Up-Displays, bei denen der Fahrer das virtuelle Bild VB in einem Bereich sieht, in dem er durch die Windschutzscheibe 41 nach außen blicken kann, gibt es einen Weg, auf dem Sonnenlicht LS auf die in der Zwischenbildebene befindliche Streuscheibe 3, auf die das Bild für die weitere Abbildungsstufe zu einem virtuellen Bild VB projiziert wird, auftreffen kann. Dieses Sonnenlicht LS wird zudem teilweise noch mehr oder weniger stark durch die Abbildungsstufe fokussiert. In der Zwischenbildebene sitzt die Streuscheibe 3 oder eine andere Art von Streuscheibe, die das Bild über die sogenannte Eyebox sichtbar macht. Durch diese Funktion wird die Streuscheibe 3 oft auch als Exit-Pupil-Exander bezeichnet. Die Streuscheibe 3 wirft auch einen Teil des Sonnenlichts LS zurück, wodurch der Bildkontrast reduziert werden kann, beziehungsweise wodurch dieses Licht in Form von unerwünschten und/oder störenden Reflexen oder Aufhellungen für den Fahrer sichtbar werden kann. Die vorliegende Erfindung reduziert Reflexe des der Streuscheibe 3 erheblich beziehungsweise lenkt sie in Richtungen, in denen sie nicht mehr aus der Eyebox heraus wahrgenommen werden können.

Als Eyebox wird der räumliche Bereich bezeichnet, in dem sich das Auge 42 des Betrachters befinden muß, damit dieser das virtuelle Bild VB vollständig, also ohne Beschnitt, wahrnehmen kann. Befindet sich das Auge 42 des Betrachters außerhalb der Eyebox, so ist das virtuelle Bild VB nur teilweise oder garnicht wahrnehmbar. Wird das Störlicht LS also in einen räumlichen Bereich geleitet, der außerhalb der Eyebox liegt, so wirkt es sich zumindest nicht als Irritation für das vom Head-Up-Display erzeugte virtuelle Bild VB aus. Störende Reflexe werden mithilfe der Erfindung auch in der größeren, erweiterten Eyebox weitestgehend vermieden. Unter der erweiterten Eyebox versteht man den Bereich, in dem sich das Auge des Fahrers auch befinden kann, von welchem Bereich aus die Anzeige des Head-Up-Displays aber nicht oder nur teilweise sichtbar ist.

Erfindungsgemäß ist eine Streuscheibe 3 mit fokussierenden Elementen 31 aufgebaut, beispielsweise mit einem Mikrolinsenarray 310. Die Eingangsaperturen der Mikrolinsen 311 liegen dabei in Richtung des Projektionssystems 2. In der grundlegenden Ausführungsform liegt eine lichtblockierende Maske 32 auf der Seite des Sonneneinfalls, die so gestaltet ist, daß das vom Projektionssystem 2 kommende Licht diese passieren kann, das meiste andere Licht aber abgeblockt wird. Das einfallende Sonnenlicht LS kann die Maske 32 nur durch ihre Öffnungen 321 passieren, der Rest wird absorbiert, oder im Falle einer reflektiven Maske 32 in eine Lichtfalle gelenkt. Von der Oberfläche kommt also nur restreflektiertes und an den Öffnungen 321 beziehungsweise an der Maske 32 gestreutes Licht zurück. Das Sonnenlicht, das dennoch passiert und von der dem Projektionssystem 2 zugewandten Seite der Struktur reflektiert, gegebenenfalls totalreflektiert wird, muß, um einen störenden Effekt zu zeigen, wiederum die Maske 32 passieren. Insgesamt wird mit diesem Ansatz die Rückreflexneigung der als Eye-Pupil-Expander wirkenden Streuscheibe 3 erheblich reduziert.

Gemäß der Erfindung wird die Funktion eines Exit-Pupil-Expanders, die hier durch die Streuscheibe 3 erfüllt wird, durch eine spezielle Maske 32 ergänzt, die eine Störlichtfilterung erlaubt. In weiteren Varianten wird zusätzlich eine Lichtfalle eingesetzt beziehungsweise es wird eine weitere Strahlformung durchgeführt. Neben der Grundausführung sind unter anderem folgende Varianten zu nennen: Es wird eine vollabsorbierende Maske verwendet, eine vollreflektive Maske, eine Maske die einseitig reflektiv und einseitig absorbierend ausgeführt ist. Weitere Varianten weisen eine Kombination mit einer zweiten strukturierten Oberfläche 33 zur weiteren Strahlformung auf. Die Erzeugung der Maske 32 erfolgt vorzugsweise mittels Belichtung durch die Struktur selbst, beispielsweise in Verbindung mit Kurzpulslasern.

Es liegt im Können des Fachmanns, eine oder mehrere der genannten Maßnahmen abzuändern oder in anderer Kombination einzusetzen, auch wenn diese nicht explizit hier beschrieben sind. Die Erfindung ist in den unabhängigen Ansprüchen definiert.

## Patentansprüche

1. Head-Up-Display aufweisend entweder ein Anzeigeelement (1) und ein Projektionssystem (2) oder eine Zwischenbilderzeugungseinheit, bei der ein Bild erst auf einer Zwischenbildebene entsteht, sowie eine Lichtquelle (11), eine Streuscheibe (3) und ein Spiegelelement (4,41), wobei das Projektionssystem (2) bzw. die Zwischenbilderzeugungseinheit zwischen Lichtquelle (11) und Streuscheibe (3) angeordnet ist, und wobei die Streuscheibe (3) auf ihrer dem Projektionssystem (2) bzw. der Zwischenbilderzeugungseinheit zugewandten Seite fokussierende Elemente (31,315,316,317) und auf ihrer dem Projektionssystem (2) bzw. der Zwischenbilderzeugungseinheit abgewandten Seite eine lichtblockierende Maske (32) aufweist , wobei die fokussierenden Elemente (31,315,316,317) dazu eingerichtet sind, vom Projektionssystem (2) bzw. der Zwischenbilderzeugungseinheit kommendes Licht auf Öffnungen der lichtblockierenden Maske (32) zu fokussieren, **dadurch gekennzeichnet, dass** die fokussierenden Elemente (31,315,316,317) unregelmäßig auf der Fläche der Streuscheibe (3) angeordnet sind.

2. Head-Up-Display gemäß Anspruch 1, wobei die lichtblockierende Maske (32) aus einem lichtabsorbierenden Material besteht.

3. Head-Up-Display gemäß einem der vorhergehenden Ansprüche, wobei die fokussierenden Elemente (31) durch ein Mikrolinsenarray (310) gebildet sind.

4. Head-Up-Display gemäß Anspruch 3, wobei die Mikrolinsen (312-314) des Mikrolinsenarrays (310) verkippt angeordnet sind.

5. Head-Up-Display gemäß einem der vorhergehenden Ansprüche, wobei die Streuscheibe (3) auf der dem Projektionssystem (2) bzw. der Zwischenbilderzeugungseinheit abgewandten Seite der lichtblockierenden Maske (32) eine weitere Oberflächenstruktur (33,34) aufweist.

6. Head-Up-Display gemäß einem der Ansprüche 1 bis 4, wobei die Streuscheibe (3) auf der dem Projektionssystem (2) bzw. der Zwischenbilderzeugungseinheit zugewandten Seite der lichtblockierenden Maske (32) eine weitere Oberflächenstruktur (35) aufweist.

7. Head-Up-Display gemäß einem der Ansprüche 5 bis 6, wobei die Oberflächenstruktur (33) eine eine Feldlinsenfunktion realisierende Oberflächenstruktur ist.

8. Head-Up-Display gemäß einem der vorhergehenden Ansprüche, wobei die Öffnungen (51) der Maske (32) weniger als 5% der Fläche der Maske (32) einnehmen.

9. Head-Up-Display gemäß einem der vorhergehenden Ansprüche, wobei die Zwischenbilderzeugungseinheit ein Phasenmodulator (12) oder ein Laser-Scanning-System ist.

10. Head-Up-Display gemäß einem der vorhergehenden Ansprüche, wobei die fokussierenden Elemente (31,315,316,317) unregelmäßige Formen aufweisen.

11. Head-Up-Display gemäß Anspruch 10, wobei die fokussierenden Elemente (31,315,316,317) eine gemeinsame Strukturgröße aufweisen.

12. Head-Up-Display gemäß einem der Ansprüche 10 bis 11, wobei die fokussierenden Elemente (31,315,316,317) zumindest eines aus runder Form, länglicher Form und unregelmäßiger Form aufweisen.

13. Optische Einheit für ein Head-Up-Display gemäß einem der vorhergehenden Ansprüche welches die optische Einheit und ein Spiegelelement (4,41) aufweist, wobei die optische Einheit aufweist ein Anzeigeelement (1), ein Projektionssystem (2) und eine Streuscheibe (3), wobei die Streuscheibe (3) auf ihrer dem Projektionssystem (2) zugewandten Seite fokussierende Elemente (31,315,316,317) und auf ihrer dem Projektionssystem (2) abgewandten Seite eine lichtblockierende Maske (32) aufweist , wobei die fokussierenden Elemente (31,315,316,317) dazu eingerichtet sind, vom Projektionssystem (2) kommendes Licht auf Öffnungen der lichtblockierenden Maske (32) zu fokussieren, **dadurch gekennzeichnet, dass** die fokussierenden Elemente (31,315,316,317) unregelmäßig auf der Fläche der Streuscheibe (3) angeordnet sind.

14. Verfahren zum Herstellen eines Head-Up-Displays, aufweisend die Schritte:
- Erzeugen (S1) fokussierender Elemente (31,315,316,317) auf einer ersten Seite einer Streuscheibe (3), wobei die fokussierenden Elemente (31,315,316,317) unregelmäßig auf der Fläche der Streuscheibe (3) angeordnet sind;
- Aufbringen (S2) einer lichtblockierenden Beschichtung (320) auf die der ersten Seite gegenüberliegende zweite Seite der Streuscheibe (3);
- Belichten (S3) der ersten Seite mit einem Strahlenbündel (SB) definierter geometrischer Eigenschaften mit einer Wellenlänge, Intensität und Dauer, die zum Erzeugen von Öffnungen (321) in der Beschichtung (320) geeignet ist;
- Aufbringen der Öffnungen (321) durch Laserablation oder andere Wechselwirkungen des Lichts mit der Beschichtung (320);
- Kombinieren (S4) der Streuscheibe (3) mit einem Projektionssystem (2), welches ein Strahlenbündel der genannten definierten geometrischen Eigenschaften zu erzeugen in der Lage ist, und mit einem Anzeigeelement (1).

15. Verfahren gemäß Anspruch 14, aufweisend die Schritte:
- Aufbringen (S31) eines Klebemittels (333) auf die zweite Seite der Streuscheibe (3);
- Aufbringen (S32) einer Mikrolinsenanordnung (330) auf die mit dem Klebemittel (333) versehene zweite Seite;
- Justieren (S33) der Mikrolinsenanordnung (330) bezüglich der fokussierenden Elemente (31);
- Aushärten (S34) des Klebemittels (333).

## Claims

1. Head-up display comprising either a display element (1) and a projection system (2) or an intermediate image generation unit, in which an image is only created in an intermediate image plane, and a light source (11), a diffusing plate (3) and a mirror element (4, 41), wherein the projection system (2) or the intermediate image generation unit is arranged between the light source (11) and the diffusing plate (3), and wherein the diffusing plate (3) comprises focusing elements (31, 315, 316, 317) on its side facing the projection system (2) or intermediate image generation unit and a light-blocking mask (32) on its side facing away from the projection system (2) or intermediate image generation unit, wherein the focusing elements (31, 315, 316, 317) are configured to focus light coming from the projection system (2) or intermediate image generation unit on openings in the light-blocking mask (32), **characterized in that** the focusing elements (31, 315, 316, 317) are arranged irregularly on the surface area of the diffusing plate (3).

2. Head-up display according to Claim 1, wherein the light-blocking mask (32) consists of a light-absorbing material.

3. Head-up display according to either of the preceding claims, wherein the focusing elements (31) are formed by a microlens array (310).

4. Head-up display according to Claim 3, wherein the microlenses (312-314) of the microlens array (310) are arranged in tilted fashion.

5. Head-up display according to any of the preceding claims, wherein the diffusing plate (3) comprises a further surface structure (33, 34) on the side of the light-blocking mask (32) facing away from the projection system (2) or intermediate image generation unit.

6. Head-up display according to any of Claims 1 to 4, wherein the diffusing plate (3) comprises a further surface structure (35) on the side of the light-blocking mask (32) facing the projection system (2) or intermediate image generation unit.

7. Head-up display according to either of Claims 5 and 6, wherein the surface structure (33) is a surface structure that realizes a field lens function.

8. Head-up display according to any of the preceding claims, wherein the openings (51) in the mask (32) make up less than 5% of the surface area of the mask (32).

9. Head-up display according to any of the preceding claims, wherein the intermediate image generation unit is a phase modulator (12) or a laser scanning system.

10. Head-up display according to any of the preceding claims, wherein the focusing elements (31, 315, 316, 317) have irregular shapes.

11. Head-up display according to Claim 10, wherein the focusing elements (31, 315, 316, 317) have a common structure size.

12. Head-up display according to either of Claims 10 and 11, wherein the focusing elements (31, 315, 316, 317) have at least one of a round shape, an elongate shape and an irregular shape.

13. Optical unit for a head-up display according to any of the preceding claims comprising the optical unit and a mirror element (4, 41), wherein the optical unit comprises a display element (1), a projection system (2) and a diffusing plate (3), wherein the diffusing plate (3) comprises focusing elements (31, 315, 316, 317) on its side facing the projection system (2) and a light-blocking mask (32) on its side facing away from the projection system (2), wherein the focusing elements (31, 315, 316, 317) are configured to focus light coming from the projection system (2) on openings in the light-blocking mask (32), **characterized in that** the focusing elements (31, 315, 316, 317) are arranged irregularly on the surface area of the diffusing plate (3).

14. Method for producing a head-up display, including the steps of:
- creating (S1) focusing elements (31, 315, 316, 317) on a first side of a diffusing plate (3), wherein the focusing elements (31, 315, 316, 317) are arranged irregularly on the surface area of the diffusing plate (3);
- applying (S2) a light-blocking coating (320) to the second side of the diffusing plate (3) that lies opposite the first side;
- exposing (S3) the first side to a beam (SB) having defined geometric properties with a wavelength, an intensity and a duration suitable for creating openings (321) in the coating (320);
- applying the openings (321) by laser ablation or other interactions of the light with the coating (320);
- combining (S4) the diffusing plate (3) with a projection system (2) that is able to create a beam having the stated defined geometric properties and with a display element (1).

15. Method according to Claim 14, including the steps of:
- applying (S31) an adhesive (333) to the second side of the diffusing plate (3);
- applying (S32) a microlens arrangement (330) to the second side that has been provided with the adhesive (333);
- aligning (S33) the microlens arrangement (330) relative to the focusing elements (31);
- curing (S34) the adhesive (333).

## Revendications

1. Affichage tête haute comprenant soit un élément d'affichage (1) et un système de projection (2), soit une unité de génération d'image intermédiaire, dans laquelle une image est d'abord générée sur un plan d'image intermédiaire, ainsi qu'une source de lumière (11), un diffuseur (3) et un élément miroir (4, 41), le système de projection (2) ou l'unité de génération d'image intermédiaire étant agencé(e) entre la source lumineuse (11) et le diffuseur (3), et le diffuseur (3) présentant des éléments de focalisation (31, 315, 316, 317) sur son côté tourné vers le système de projection (2) ou vers l'unité de génération d'image intermédiaire, et un masque (32) de blocage de la lumière, sur son côté tourné à l'opposé du système de projection (2) ou de l'unité de génération d'image intermédiaire, les éléments de focalisation (31, 315, 316, 317) étant conçus pour focaliser la lumière provenant du système de projection (2) ou de l'unité de génération d'image intermédiaire sur des ouvertures dans le masque (32) de blocage de la lumière, **caractérisé en ce que** les éléments de focalisation (31, 315, 316, 317) sont agencés de manière irrégulière sur la surface du diffuseur (3).

2. Affichage tête haute selon la revendication 1, dans lequel le masque (32) de blocage de la lumière est constitué d'un matériau absorbant la lumière.

3. Affichage tête haute selon l'une des revendications précédentes, dans lequel les éléments de focalisation (31) sont formés par un réseau de microlentilles (310).

4. Affichage tête haute selon la revendication 3, dans lequel les microlentilles (312-314) du réseau de microlentilles (310) sont agencées de manière inclinée.

5. Affichage tête haute selon l'une des revendications précédentes, dans lequel le diffuseur (3) présente une autre structure de surface (33, 34) sur le côté du masque (32) de blocage de la lumière opposé au système de projection (2) ou à l'unité de génération d'image intermédiaire.

6. Affichage tête haute selon l'une des revendications 1 à 4, dans lequel le diffuseur (3) présente une autre structure de surface (35) sur le côté du masque (32) de blocage de la lumière tourné vers le système de projection (2) ou l'unité de génération d'image intermédiaire.

7. Affichage tête haute selon l'une des revendications 5 à 6, dans lequel la structure de surface (33) est une structure de surface réalisant une fonction de lentille de champ.

8. Affichage tête haute selon l'une des revendications précédentes, dans lequel les ouvertures (51) du masque (32) occupent moins de 5% de la surface du masque (32).

9. Affichage tête haute selon l'une des revendications précédentes, dans lequel l'unité de génération d'image intermédiaire est un modulateur de phase (12) ou un système de balayage laser.

10. Affichage tête haute selon l'une des revendications précédentes, dans lequel les éléments de focalisation (31, 315, 316, 317) présentent des formes irrégulières.

11. Affichage tête haute selon la revendication 10, dans lequel les éléments de focalisation (31, 315, 316, 317) présentent une taille de structure commune.

12. Affichage tête haute selon l'une des revendications 10 à 11, dans lequel les éléments de focalisation (31, 315, 316, 317) présentent au moins une parmi : une forme ronde, une forme oblongue et une forme irrégulière.

13. Unité optique pour un affichage tête haute selon l'une des revendications précédentes, qui comprend l'unité optique et un élément miroir (4, 41), l'unité optique comprenant un élément d'affichage (1), un système de projection (2) et un diffuseur (3), le diffuseur (3) présentant des éléments de focalisation (31, 315, 316, 317) sur son côté tourné vers le système de projection (2) et un masque (32) de blocage de la lumière sur son côté opposé au système de projection (2), les éléments de focalisation (31, 315, 316, 317) étant conçus pour focaliser la lumière provenant du système de projection (2) sur des ouvertures du masque (32) de blocage de la lumière, **caractérisée en ce que** les éléments de focalisation (31, 315, 316, 317) sont agencés de manière irrégulière sur la surface du diffuseur (3).

14. Procédé de fabrication d'un affichage tête haute, comprenant les étapes suivantes :
- créer (S1) des éléments de focalisation (31, 315, 316, 317) sur un premier côté d'un diffuseur (3), les éléments de focalisation (31, 315, 316, 317) étant agencés de manière irrégulière sur la surface du diffuseur (3) ;
- appliquer (S2) un revêtement bloquant la lumière (320) sur le deuxième côté du diffuseur (3) opposé au premier côté ;
- exposer (S3) le premier côté à un faisceau de rayons (SB) aux propriétés géométriques définies, avec une longueur d'onde, une intensité et une durée adaptées à la création d'ouvertures (321) dans le revêtement (320) ;
- appliquer les ouvertures (321) par ablation laser ou par d'autres interactions de la lumière avec le revêtement (320) ;
- combiner (S4) le diffuseur (3) avec un système de projection (2), apte à générer un faisceau de rayons ayant les propriétés géométriques définies mentionnées, et avec un élément d'affichage (1).

15. Procédé selon la revendication 14, comprenant les étapes suivantes :
- appliquer (S31) un adhésif (333) sur le deuxième côté du diffuseur (3) ;
- appliquer (S32) un ensemble de microlentilles (330) sur le deuxième côté pourvu de l'adhésif (333) ;
- ajuster (S33) le dispositif de microlentilles (330) par rapport aux éléments de focalisation (31) ;
- réaliser le durcissement (S34) de l'adhésif (333).
